# FASCICULE DE BREVET EUROPEEN

(11) **EP 4 495 010 B1**
(45) Date de publication et mention de la délivrance du brevet: **02.09.2026**
(21) Numéro de dépôt: 24189335.3
(22) Date de dépôt: 18.07.2024
(51) Int. Cl.: B64D 37/30, B64D 37/32, A62C 3/06

(54) **MODULE POUR AÉRONEF COMPORTANT UN SYSTÈME DE TRAITEMENT DE DIHYDROGÈNE**
MODUL FÜR EIN FLUGZEUG MIT EINEM SYSTEM ZUR VERARBEITUNG VON DIWASSERSTOFF
MODULE FOR AN AIRCRAFT COMPRISING A SYSTEM FOR PROCESSING DIHYDROGEN

(30) Priorité: 20.07.2023 FR 2307799
(43) Date de publication de la demande: 22.01.2025
(73) Titulaire: Airbus Operations (S.A.S.), 31060 Toulouse Cedex 9 (FR)
(72) Inventeur: MILLIERE, Jérôme, 31060 Toulouse (FR); CZAPLA, Lionel, 31060 Toulouse (FR); JOUBERT, Romain, 31060 Toulouse (FR)
(74) Mandataire: Cabinet Le Guen Maillet

(56) Documents cités:
- EP-A1- 4 265 526
- FR-A1- 3 131 359
- US-A1- 2023 043 843

## Description

### DOMAINE TECHNIQUE

La présente invention concerne un module comportant un caisson dans lequel est logé un système de traitement pour du dihydrogène servant à alimenter un moteur d'aéronef et où le caisson est rempli de billes, un procédé de remplissage du module, ainsi qu'un aéronef comportant au moins un tel module.

### ÉTAT DE LA TECHNIQUE ANTÉRIEURE

Afin de réduire les émissions de dioxyde de carbone (CO₂) des moteurs d'aéronef, il est connu d'utiliser le dihydrogène comme carburant. L'aéronef comporte alors un réservoir de dihydrogène, et au moins un moteur alimenté par ledit dihydrogène grâce à des canalisations qui courent dans l'aéronef, entre le réservoir et chaque moteur et sur lesquelles des systèmes de traitement du dihydrogène comme des pompes, des réchauffeurs et des vannes sont installés.

La sécurité doit être assurée si un incident intervient sur la ligne d'alimentation entre le réservoir et le moteur. Pour cela, il est connu de mettre en place différents systèmes de sécurité.

Bien qu'un tel arrangement soit performant, il est souhaitable de limiter le volume de dihydrogène qui s'échappe lors d'un incident.

Le document US-A-2023/043843 divulgue un module pour aéronef de l'état de la technique, et en particulier un aéronef comprenant au moins un dispositif d'alimentation en hydrogène ainsi qu'au moins un contenant étanche à l'air extérieur audit contenant dans lequel est positionné au moins un équipement du dispositif d'alimentation en hydrogène.

Les documents FR-A-3 131 359 et EP-A-4 265 526 divulguent des modules de l'état de la technique.

### EXPOSE DE L'INVENTION

Un objet de la présente invention est de proposer un module pour aéronef comportant un caisson dans lequel est disposé un système de traitement du dihydrogène où ledit caisson est rempli de billes permettant de réduire la place disponible pour le dihydrogène en cas de fuite. À cet effet, est proposé un module pour un aéronef, ledit module comportant :
- un caisson étanche et comportant des parois délimitant un volume intérieur,
- un système de traitement destiné à traiter du dihydrogène et fixé à l'intérieur dudit caisson,
- des billes remplissant le volume intérieur,
- une prise d'introduction fluidiquement connectée audit volume intérieur et équipée d'une première vanne d'arrêt permettant le passage des billes,
- une prise d'évacuation fluidiquement connectée audit volume intérieur et équipée d'une deuxième vanne d'arrêt permettant le passage d'air lors d'un remplissage.

Par la présence des billes, l'espace disponible pour le dihydrogène en cas de fuite à l'intérieur du caisson est réduit ce qui limite la quantité de dihydrogène pouvant être présente dans ledit caisson.

Avantageusement, le module comporte une membrane disposée dans le volume intérieur et fixée aux parois d'un côté du système de traitement en délimitant le volume intérieur en un premier sous-volume et un deuxième sous-volume où est disposé le système de traitement, où la prise d'introduction débouche directement dans le premier sous-volume et où la prise d'évacuation débouche directement dans le premier sous-volume.

Avantageusement, le module comporte une prise d'aspiration fluidiquement connectée au deuxième volume et équipée d'une troisième vanne d'arrêt.

Avantageusement, la membrane et sa fixation aux parois sont étanches.

Avantageusement, les billes sont étanches.

Avantageusement, les billes sont des billes de verre.

L'invention propose également un procédé de remplissage d'un module selon l'une des variantes précédentes, où le procédé comporte les étapes de :
- fourniture du caisson sans bille,
- ouverture de la première vanne d'arrêt et de la deuxième vanne d'arrêt et de la troisième vanne d'arrêt lorsqu'elle est présente,
- introduction des billes par la prise d'introduction, jusqu'à ce que le caisson soit rempli,
- arrêt de l'introduction des billes, et
- fermeture de la première vanne d'arrêt et de la deuxième vanne d'arrêt et de la troisième vanne d'arrêt lorsqu'elle est présente.

Avantageusement, la prise d'évacuation et la prise d'aspiration (230) lorsqu'elle est présente sont fluidiquement connectées à une pompe à vide.

L'invention propose également un aéronef comportant un réservoir de dihydrogène, un moteur, et au moins un module selon l'une des variantes précédentes fluidiquement connecté entre le réservoir et le moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique et en coupe d'un module selon un premier mode de réalisation de l'invention,
Fig. 3 est une représentation schématique et en coupe d'un module selon un deuxième mode de réalisation de l'invention, et
Fig. 4 est une vue éclatée du module de la Fig. 3.

### EXPOSÉ DÉTAILLÉ DE MODES DE RÉALISATION

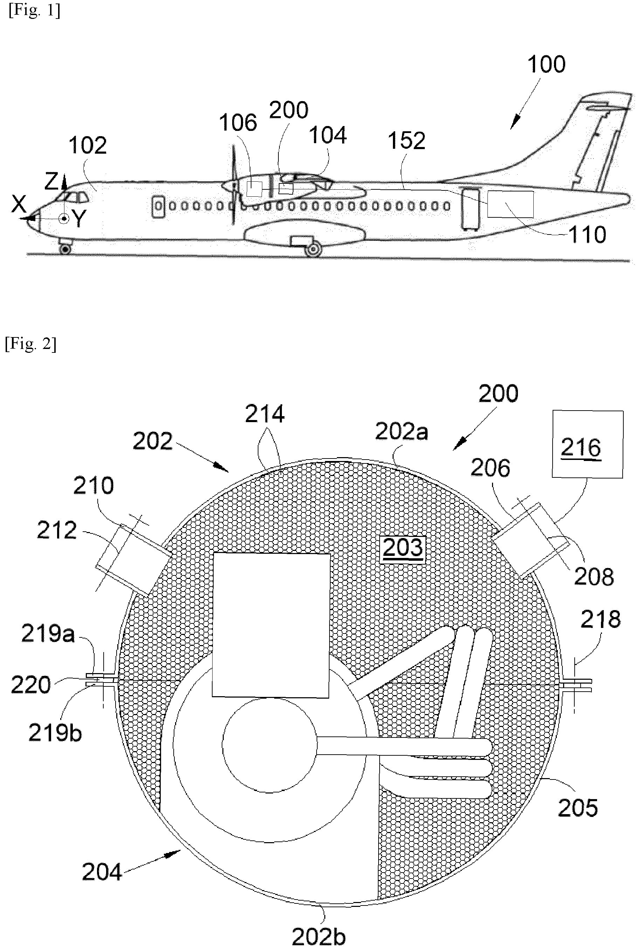

Dans la description qui suit, les termes relatifs à une position sont pris en référence à un aéronef en position normale de vol, c'est-à-dire comme il est représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du dihydrogène comme carburant. Dans le mode de réalisation de l'invention présenté à la Fig. 1, le moteur 106 est un moteur à hélice, par exemple un moteur électrique alimenté par une pile à combustible à dihydrogène, mais tout autre type de moteur est envisageable.

La flèche F indique la direction en marche avant de l'aéronef 100.

L'aéronef 100 comporte au moins un réservoir 110 dans lequel est stocké le dihydrogène, préférentiellement sous forme liquide. Dans le mode de réalisation de l'invention, le réservoir 110 est disposé à l'arrière du fuselage 102, mais un positionnement différent est possible. L'aéronef 100 comporte également au moins un module 200 qui est fluidiquement connecté entre le réservoir 1010 et le moteur 106, en particulier par l'intermédiaire d'une canalisation générale 152 qui est elle-même fluidiquement connectée entre le réservoir 110 et le moteur 106 à alimenter.

Le module 200 est monté de manière étanche sur la canalisation générale 152, c'est-à-dire que la canalisation générale 152 traverse le module 200 de part en part. Dans le mode de réalisation de l'invention présenté sur la Fig. 1, il y a un seul module 200 mais il peut y en avoir plusieurs disposés les uns à la suite des autres le long de la canalisation générale 152.

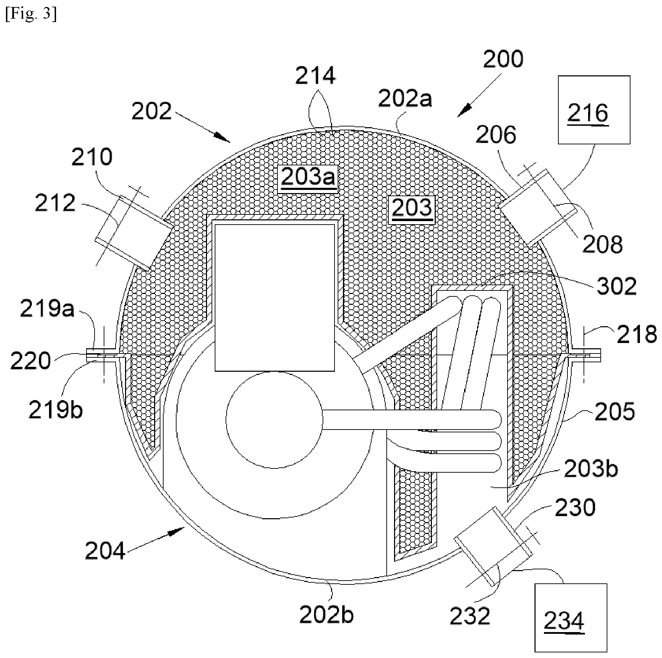

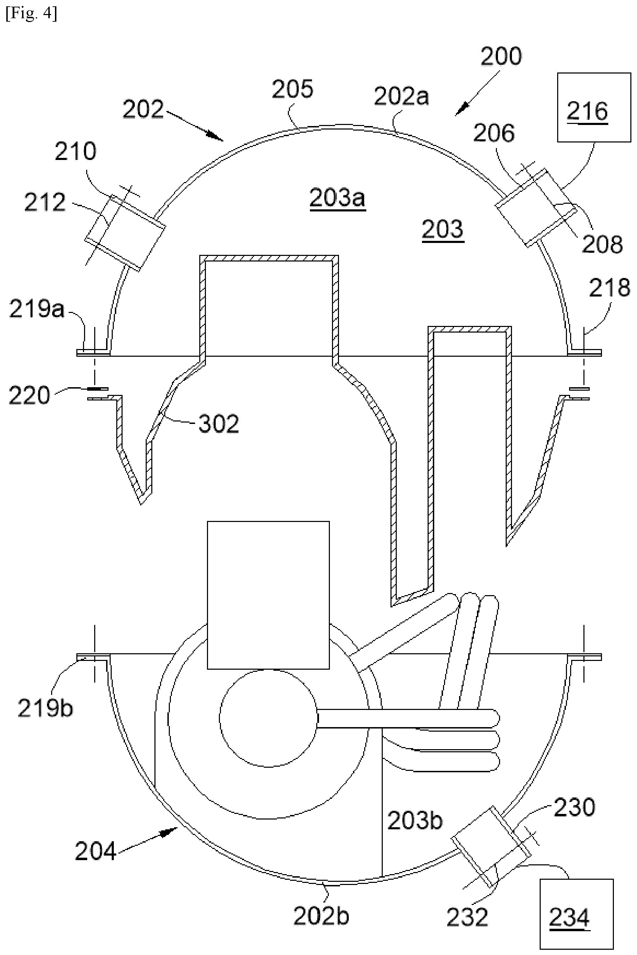

La Fig. 2 montre le module 200 selon un premier mode de réalisation de l'invention et les Figs. 3 et 4 montrent le module 200 selon un deuxième mode de réalisation de l'invention. Dans le premier et le deuxième modes de réalisation, le module 200 comporte un caisson 202 qui comporte des parois 205 délimitant un volume intérieur 203. Le caisson 202 est étanche pour empêcher que du dihydrogène qui serait présent dans le caisson 202 se répande hors du caisson 202.

La canalisation générale 152 traverse l'une des parois 205 en provenant du réservoir 110 et traverse l'une des parois 205 pour atteindre le moteur 106. La traversée de chaque paroi 205 de la canalisation générale 152 s'effectue de manière étanche à l'aide de moyens appropriés et connus de l'homme du métier.

Le module 200 comporte également un système de traitement 204 qui traite le dihydrogène qui s'écoule dans la canalisation générale 152 traversant le caisson 202. Un tel système de traitement 204 est par exemple une pompe, un réchauffeur ou une vanne ou autres ou un ensemble de plusieurs de ces éléments.

Le système de traitement 204 est fixé à l'intérieur du caisson 202 en particulier en étant fixé aux parois 205 par tous moyens de fixation appropriés comme des systèmes vis-écrous, des rivets, etc.

La mise en place du système de traitement 204 dans le caisson 202 permet de contenir le dihydrogène dans le caisson 202 en cas de fuite au niveau du système de traitement 204.

Le caisson 202 est rempli au moins en partie de billes 214, en particulier des billes de verre avec un diamètre de l'ordre de 30 à 125 micromètres. Chaque bille 214 est préférentiellement étanche pour empêcher au dihydrogène de s'y introduire.

Les billes 214 remplissent ainsi le volume intérieur 203 autour du système de traitement 204 et en fonction du degré de remplissage du volume intérieur 203, l'espace restant pour le dihydrogène en cas de fuite est réduit d'autant.

Pour permettre le remplissage du caisson 202 avec les billes 214, le module 200 comporte une prise d'introduction 210 fluidiquement connectée au volume intérieur 203 à travers une paroi 205. Pour autoriser ou interdire le passage des billes 214, la prise d'introduction 210 est équipée d'une première vanne d'arrêt 212 qui peut donc être manipulée entre une position ouverte dans laquelle les billes 214 peuvent passer par la prise d'introduction 210 et une position fermée dans laquelle les billes 214 ne peuvent pas passer par la prise d'introduction 210.

Pour permettre à l'air présent dans le caisson 202 de s'échapper lors du remplissage du caisson 202 par les billes 214, le module 200 comporte une prise d'évacuation 206 fluidiquement connectée au volume intérieur 203 à travers une paroi 205. Pour autoriser ou interdire le passage de l'air, la prise d'évacuation 206 est équipée d'une deuxième vanne d'arrêt 208 qui peut donc être manipulée entre une position ouverte dans laquelle l'air peut passer par la prise d'évacuation 206 et une position fermée dans laquelle l'air ne peut pas passer par la prise d'évacuation 206.

Avec un tel arrangement, il est ainsi facile de remplir le caisson 202 de billes 214 limitant le volume disponible pour le dihydrogène en cas de fuite.

Pour assurer l'étanchéité du caisson 202, les vannes d'arrêt 208 et 212 sont étanches à l'air et au dihydrogène en position fermée.

Dans le deuxième mode de réalisation de l'invention, le module 200 comporte en outre une membrane 302 qui est disposée dans le volume intérieur 203 et fixée aux parois 205.

La membrane 302 est disposée de manière à être d'un côté du système de traitement 204 et elle délimite le volume intérieur 203 en un premier sous-volume 203a d'un côté de la membrane 302 et un deuxième sous-volume 203b de l'autre côté de la membrane 302.

Le système de traitement 204 est disposé dans le deuxième sous-volume 203b.

La prise d'introduction 210 débouche directement dans le premier sous-volume 203a et la prise d'évacuation 206 débouche directement dans le premier volume 203a.

Dans le deuxième mode de réalisation de l'invention, le module 200 comporte en outre une prise d'aspiration 230 fluidiquement connectée au deuxième volume 203b à travers une paroi 205. Pour autoriser ou interdire le passage de l'air, la prise d'aspiration 230 est équipée d'une troisième vanne d'arrêt 232 qui peut donc être manipulée entre une position ouverte dans laquelle l'air peut passer par la prise d'aspiration 230 et une position fermée dans laquelle l'air ne peut pas passer par la prise d'aspiration 230.

Pour aider les billes 214 à occuper le maximum de place et donc à vider l'air présent dans le deuxième volume 203b, il est possible de créer un vide artificiel dans ledit deuxième volume 203b en connectant fluidiquement la prise d'aspiration 230 à une pompe à vide 234.

La mise en place d'une membrane 302 permet de séparer les billes 214 du système de traitement 204. En effet, du fait de la construction, les billes 214 vont remplir le premier sous-volume 203a sans entrer dans le deuxième sous-volume 203b.

La souplesse de la membrane 302 permet d'épouser au mieux la forme du système de traitement 204.

Dans les deux modes de réalisation, un procédé de remplissage du module 200 comporte les étapes de :
- fourniture du caisson 202 sans bille 214 et rempli d'air,
- ouverture de la première vanne d'arrêt 208 et de la deuxième vanne d'arrêt 212,
- introduction des billes 214 par la prise d'introduction 210, jusqu'à ce que le caisson 202 soit rempli, en particulier au degré de remplissage souhaité, et au cours de laquelle l'air présent dans le caisson 202 s'évacue par la prise d'évacuation 206,
- arrêt de l'introduction des billes 214, et
- fermeture de la première vanne d'arrêt 208 et de la deuxième vanne d'arrêt 212 pour fermer le caisson 202 de manière étanche.

Pour retirer les billes 214, une procédure inverse peut être mise en œuvre.

L'air sort du caisson 202 de manière naturelle du fait que les billes 214 occupent progressivement le volume intérieur 203. Pour aider les billes 214 à occuper le maximum de place, il est possible de créer un vide artificiel dans le caisson 202 en connectant fluidiquement la prise d'évacuation 206 à une pompe à vide 216.

Dans le premier mode de réalisation, la prise d'évacuation 206 est arrangée de manière à ce que les billes 214 ne peuvent pas sortir par ladite prise d'évacuation 206, par exemple par mise en place d'un filtre.

Dans le deuxième mode de réalisation, comme précisé précédemment, la membrane 302 est aspirée par la pompe à vide 234 et se plaque contre le système de traitement 204. Pour assurer que le vide ne se propage pas au premier sous-volume 203a, la membrane 302 et sa fixation aux parois 205 sont étanches.

La pompe à vide 234 est connectée à la prise d'aspiration 230 avant l'ouverture de la troisième vanne d'arrêt 232 et elle est déconnectée de la prise d'aspiration 230 après la fermeture de la troisième vanne d'arrêt 232.

L'étape d'ouverture du procédé de remplissage consiste alors aussi à ouvrir la troisième vanne d'arrêt 232 et l'étape de fermeture du procédé de remplissage consiste alors aussi à fermer la troisième vanne d'arrêt 232.

Dans le mode de réalisation de l'invention présenté sur les Figs. 2 à 4, le caisson 202 est constitué de deux coques 202a-b où ici les deux portent la prise d'introduction 210 et la prise d'évacuation 206 et où l'autre porte le système de traitement 204 et la prise d'aspiration 230. Les deux coques 202a-b sont fixées l'une à l'autre de manière étanche par tous moyens de fixation 218 appropriés comme des systèmes vis-écrous, des rivets, etc.

Dans le mode de réalisation de l'invention présenté ici, chaque coque 202a-b présente une bride 219a-b qui s'étend sur le pourtour de la coque 202a-b et est en regard de la bride 219b-a de l'autre coque 202b-a et les moyens de fixation 218 fixent les brides 219a-b entre elles.

Pour assurer l'étanchéité entre les deux coques 202a-b, un joint 220 est disposé entre elles et plus spécifiquement ici entre les brides 219a-b.

Dans le mode de réalisation de l'invention présenté aux Figs. 3 et 4, la membrane 302 est également disposée entre les brides 219a-b avec le joint 220.

Dans un autre mode de réalisation non représenté, la membrane 302 peut être collée à la face intérieure des parois 205 et plus spécifiquement ici à la face intérieure de la coque 202b portant la prise d'aspiration 230.

Dans le deuxième mode de réalisation de l'invention avec les deux coques 202a-b, l'étape de fourniture d'un module 200 avec un caisson 202 vide consiste à fournir les deux coques 202a-b séparées, à disposer et fixer la membrane 302 et le joint 220 et à fixer les deux coques 202a-b l'une à l'autre de manière étanche.

La mise en place et la fixation de la membrane 302 et du joint 220 consistent par exemple à les disposer entre les deux coques 202a-b avant la fixation des coques 202a-b entre elles, ou à fixer la membrane 302 à l'intérieur de la coque 202b portant la prise d'aspiration 230 et le joint 220 entre les deux coques 202a-b avant la fixation des coques 202a-b entre elles.

## Revendications

1. Module (200) pour un aéronef (100), ledit module (200) comportant :
- un caisson (202) étanche et comportant des parois (205) délimitant un volume intérieur (203),
- un système de traitement (204) destiné à traiter du dihydrogène et fixé à l'intérieur dudit caisson (202),
- des billes (214) remplissant le volume intérieur (203),
- une prise d'introduction (210) fluidiquement connectée audit volume intérieur (203) et équipée d'une première vanne d'arrêt (212) permettant le passage des billes (214), et
- une prise d'évacuation (206) fluidiquement connectée audit volume intérieur (203) et équipée d'une deuxième vanne d'arrêt (208) permettant le passage d'air lors d'un remplissage.

2. Module (200) selon la revendication 1, **caractérisé en ce qu'**il comporte une membrane (302) disposée dans le volume intérieur (203) et fixée aux parois (205) d'un côté du système de traitement (204) en délimitant le volume intérieur (203) en un premier sous-volume (203a) et un deuxième sous-volume (203b) où est disposé le système de traitement (204), où la prise d'introduction (210) débouche directement dans le premier sous-volume (203a) et où la prise d'évacuation (206) débouche directement dans le premier sous-volume (203a).

3. Module (200) selon la revendication 2, **caractérisé en ce qu'**il comporte une prise d'aspiration (230) fluidiquement connectée au deuxième volume (203b) et équipée d'une troisième vanne d'arrêt (232).

4. Module (200) selon l'une des revendications 2 ou 3, **caractérisé en ce que** la membrane (302) et sa fixation aux parois (205) sont étanches.

5. Module (200) selon l'une des revendications 1 à 4, **caractérisé en ce que** les billes (214) sont étanches.

6. Module (200) selon l'une des revendications 1 à 4, **caractérisé en ce que** les billes (214) sont des billes de verre.

7. Procédé de remplissage d'un module (200) selon l'une des revendications 1 à 6 où le procédé comporte les étapes de :
- fourniture du caisson (202) sans bille (214),
- ouverture de la première vanne d'arrêt (208) et de la deuxième vanne d'arrêt (212) et de la troisième vanne d'arrêt (232) lorsqu'elle est présente,
- introduction des billes (214) par la prise d'introduction (210), jusqu'à ce que le caisson (202) soit rempli,
- arrêt de l'introduction des billes (214), et
- fermeture de la première vanne d'arrêt (208) et de la deuxième vanne d'arrêt (212) et de la troisième vanne d'arrêt (232) lorsqu'elle est présente.

8. Procédé de remplissage selon la revendication 7, **caractérisé en ce que** la prise d'évacuation (206) et la prise d'aspiration (230) lorsqu'elle est présente sont fluidiquement connectées à une pompe à vide (216, 234).

9. Aéronef (100) comportant un réservoir (110) de dihydrogène, un moteur (106), et au moins un module (200) selon l'une des revendications 1 à 6 fluidiquement connecté entre le réservoir (110) et le moteur (106).

## Patentansprüche

1. Modul (200) für ein Luftfahrzeug (100), das Modul (200) umfassend:
- einen Behälter (202), der dicht ist und Wände (205) umfasst, die ein Innenvolumen (203) begrenzen,
- ein Behandlungssystem (204), das dazu bestimmt ist, Wasserstoff zu behandeln, und im Inneren des Behälters (202) befestigt ist,
- Kugeln (214), die das Innenvolumen (203) füllen,
- einen Einlassstutzen (210), der fluidisch an das Innenvolumen (203) angeschlossen ist und mit einem ersten Absperrventil (212) ausgestattet ist, das den Durchgang der Kugeln (214) ermöglicht, und
- einen Auslassstutzen (206), der fluidisch an das Innenvolumen (203) angeschlossen ist und mit einem zweiten Absperrventil (208) ausgestattet ist, das den Durchgang von Luft bei einem Befüllen ermöglicht.

2. Modul (200) nach Anspruch 1, **dadurch gekennzeichnet, dass** es eine Membran (302) umfasst, die in dem Innenvolumen (203) angeordnet und an den Wänden (205) auf einer Seite des Behandlungssystems (204) befestigt ist, wobei sie das Innenvolumen (203) zu einem ersten Teilvolumen (203a) und einem zweiten Teilvolumen (203b) abgrenzt, in dem das Behandlungssystem (204) angeordnet ist, wobei der Einlassstutzen (210) direkt in dem ersten Teilvolumen (203a) mündet und wobei der Auslassstutzen (206) direkt in dem ersten Teilvolumen (203a) mündet.

3. Modul (200) nach Anspruch 2, **dadurch gekennzeichnet, dass** es einen Ansaugstutzen (230) umfasst, der fluidisch an das zweite Volumen (203b) angeschlossen ist und mit einem dritten Absperrventil (232) ausgestattet ist.

4. Modul (200) nach einem der Ansprüche 2 oder 3, **dadurch gekennzeichnet, dass** die Membran (302) und ihre Befestigung an den Wänden (205) dicht sind.

5. Modul (200) nach einem der Ansprüche 1 bis 4, **dadurch gekennzeichnet, dass** die Kugeln (214) dicht sind.

6. Modul (200) nach einem der Ansprüche 1 bis 4, **dadurch gekennzeichnet, dass** die Kugeln (214) Glaskugeln sind.

7. Verfahren zum Befüllen eines Moduls (200) nach einem der Ansprüche 1 bis 6, wobei das Verfahren die folgenden Schritte umfasst:
- Bereitstellen des Behälters (202) ohne Kugel (214),
- Öffnen des ersten Absperrventils (208) und des zweiten Absperrventils (212) und des dritten Absperrventils (232), wenn es vorhanden ist,
- Einführen der Kugeln (214) durch den Einlassstutzen (210), bis der Behälter (202) gefüllt ist,
- Stoppen des Einführens der Kugeln (214), und
- Schließen des ersten Absperrventils (208) und des zweiten Absperrventils (212) und des dritten Absperrventils (232), wenn es vorhanden ist.

8. Verfahren zum Befüllen nach Anspruch 7, **dadurch gekennzeichnet, dass** der Auslassstutzen (206) und der Ansaugstutzen (230), wenn er vorhanden ist, fluidisch an eine Vakuumpumpe (216, 234) angeschlossen sind.

9. Luftfahrzeug (100), umfassend einen Tank (110) für Wasserstoff, ein Triebwerk (106) und mindestens ein Modul (200) nach einem der Ansprüche 1 bis 6, das fluidisch zwischen dem Tank (110) und dem Triebwerk (106) angeschlossen ist.

## Claims

1. Module (200) for an aircraft (100), said module (200) comprising:
- a sealed housing (202) comprising walls (205) delimiting an interior volume (203),
- a processing system (204) intended to process dihydrogen and fixed on the inside of said housing (202),
- beads (214) filling the interior volume (203),
- an inlet port (210) fluidically connected to said interior volume (203) and equipped with a first shut-off valve (212) allowing the passage of the beads (214), and
- an outlet port (206) fluidically connected to said interior volume (203) and equipped with a second shut-off valve (208) allowing the passage of air during a filling.

2. Module (200) according to Claim 1, **characterized in that** it comprises a membrane (302) arranged in the interior volume (203) and fixed to the walls (205) on one side of the processing system (204), delimiting the interior volume into a first sub-volume (203a) and a second sub-volume (203b) in which the processing system (204) is arranged, wherein the inlet port (210) opens out directly into the first sub-volume (203a) and the outlet port opens out directly into the first sub-volume (203a).

3. Module (200) according to Claim 2, **characterized in that** it comprises a suction port (230) fluidically connected to the second volume (203b) and equipped with a third shut-off valve (232).

4. Module (200) according to any one of Claims 2 or 3, **characterized in that** the membrane (302) and the fixing thereof to the walls (205) are sealed.

5. Module (200) according to any one of Claims 1 to 4, **characterized in that** the beads (214) are sealed.

6. Module (200) according to any one of Claims 1 to 4, **characterized in that** the beads (214) are glass beads.

7. Method for filling a module (200) according to any one of Claims 1 to 6, wherein the method comprises the steps of:
- providing the housing (202) without beads (214),
- opening the first shut-off valve (208) and the second shut-off valve (212) and the third shut-off valve (232) when present,
- introducing beads (214) through the inlet port (210) until the housing (202) is filled,
- stopping the introduction of the beads (214) and
- closing the first shut-off valve (208) and the second shut-off valve (212) and the third shut-off valve (232) when present.

8. Method for filling according to Claim 7, **characterized in that** the outlet port (206) and the suction port (230), when present, are fluidically connected to a vacuum pump (216, 234).

9. Aircraft (100) comprising a dihydrogen tank (110), an engine (106) and at least one module (200) according to any one of Claims 1 to 6, fluidically connected between the tank (110) and the engine (106).
